(19) **Europäisches Patentamt**
**European Patent Office**
**Office européen des brevets**

(11) **EP 2 953 080 A1**

(12) **EUROPEAN PATENT APPLICATION**

(43) Date of publication:
**09.12.2015 Bulletin 2015/50**

(51) Int Cl.:
**G06Q 20/40** (2012.01)     **G06F 21/00** (2013.01)
**H04L 9/00** (2006.01)

(21) Application number: **15170569.6**

(22) Date of filing: **03.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **04.06.2014 GB 201409936**

(71) Applicant: **IDscan Biometrics Limited**
**London E14 9QD (GB)**

(72) Inventors:
• **Thompson, Tamlyn Sean**
**London, E14 9QD (GB)**
• **Zeidan, Zaher**
**London, E14 9QD (GB)**

(74) Representative: **Armstrong, Rosemary**
**Armstrong IPR Limited**
**Innovation Centre**
**NI Science Park**
**Queens Road**
**Belfast, BT3 9DT (GB)**

(54) **SYSTEM, METHOD AND PROGRAM FOR SECURELY MANAGING FINANCIAL TRANSACTIONS**

(57)     A method for securely managing financial transactions, the method comprising the steps of:

creating for a first client an account in a repository to produce a first client account;

storing personal data of the first client in the first client account;

allowing the first client to configure the first client account to store therein details of

(a) one or more financial entities with whom the first client is willing to transact; and

(b) a maximum limit on a value of a transaction the first client is willing to undertake with the or each financial entity;

receiving a request from a financial entity for access to a second client account of a second client, the said request comprising a value of a transaction to be undertaken between the second client and the financial entity;

determining whether the second client has a second client account in the repository;

determining in the event the second client has a second client account in the repository, whether the financial entity is among those whose details are stored in the second client account;

comparing, in the event the financial entity is among those whose details are stored in the second client account, the value of the transaction with the details stored in the second client account of the maximum limit on the value of a transaction the second client is willing to undertake with the financial entity; and

allowing the transaction to be conducted in the event the value of the transaction is less than the maximum limit on the value of a transaction the second client 254 is willing to undertake with the financial entity;

characterised in that the step of creating an account for the first client comprises the steps of:

receiving one or more items of identity evidence from the first client;

extracting one or more features from the or each item of received identity evidence;

validating the authenticity of the or each item of received identity evidence by comparing the or each extracted feature from the or each item of received identity evidence with related one or more items of feature information acquired from an issuing source for the or each item of identity evidence; and

verifying that the first client is the genuine owner of the identity being claimed by way of the received identity evidence; and

the step of storing personal data of the first client in the first client account comprises the step of storing the extracted features from the or each item of received identity evidence whose authenticity has been validated.

EP 2 953 080 A1

First Client 224

Management Module 212

Bank 244

Second Client 254

Register Client | 200

Check Financial Health | 202

Score Client Account | 204

Configure Account | 206

208
Receive Candidate Token

210
Create Access Request

214
Receive Access Request

216
Check Access Request

218
Matching User ?

N | Y

220
Alert Message

222
Matching Organisation ?

N | Y

226
Alert Message

228
Transaction In Limits ?

N | Y

232
Alert Message

230
Conduct Transaction

234
Record Transaction Request

236
Transmit to Client

Figure 4

## Description

### Field of the Invention

The present invention relates to a method, system and computer program for securely managing financial transactions and, more particularly, but not exclusively, transactions authorised by way of authenticated personal data.

### Background to the Invention

The UK Home Office Identity Fraud Steering Committee defines identity fraud as "when a false identity or someone else's identity details are used to support unlawful activity, or when someone avoids obligation/liability by falsely claiming that he/she was the victim of identity fraud" (National Fraud Authority, Fraud Typologies and Victims of Fraud - Literature Review 2009). Identity crimes are one of the fastest growing types of fraud in the UK. The UK's Fraud prevention service found that identity fraud accounted for roughly 50% of all frauds recorded in 2012; and that there had been a 9 per cent increase in identity frauds, compared with 2011 (CIFAS 2012 Fraud Trends, 17 Jan 2013). In December 2012 the National Fraud Authority suggested that identity fraud cost UK adults approximately £3.3 billion each year (National Fraud Authority, Annual Fraud Indicator 2013). However, this does not include any losses suffered by the public, private or charity sectors. Therefore, the full cost to the UK from identity fraud each year is likely to be considerably higher. Similarly, a National Crime Victimization Survey conducted in the US found that individual financial losses due to personal identity theft totalled $24.7 billion, over $10 billion more than the losses attributed to all other property crimes measured in the survey (Victims of Identity Theft 2012).

The first step in identity theft is obtaining personal data (e.g. credit card numbers, social security numbers, driver's license numbers, ATM numbers, mortgage details, date of birth, passwords and PINs, home address, phone numbers etc. (A. Hedayati, Jnl of law and Conflict Resolution, 4(1), 2012, 1-12)) pertaining to the victim. For clarity, and borrowing from the Data Protection Act 1998, the term "personal data" will be used henceforth to refer to data which relate to a living individual who can be identified from those data alone or in combination with other information in the possession of another person.

The most common form of personal data obtained by offenders is credit card data. Offenders use this to order new credit cards and/or duplicate cards on an existing account; and to buy merchandise for their own use or to resell/return for cash (H. Copes H., and L. Vieraitis (2009) Identity Theft in J. Miller (Ed.) 21st Century Criminology: a Reference Handbook, Thousand Oaks, SAGE Publications Inc.). Offenders may sometimes change the billing address on a victim's credit card, so that the victim will not receive bills for the illicit purchases and see the fraudulent charges; thereby allowing the thief more time to abuse the victim's identity and credit. Offenders may also use stolen identities to acquire or produce additional identity-related documents, e.g. birth certificates, driver's licenses, social security cards and state identification cards etc.. To reduce the risk of their identity being stolen, individuals are recommended to carry identity documents only when they are needed; and, at all other times, to keep their identity documents in a safe place.

In a recent good practice guide (Good Practice Guide 45, December 2013 Issue No 2.2 - Identity Proofing and Verification of an Individual) the UK Cabinet Office and the Communications Electronics Security Group (CESG) set out four levels of identity-proofing, providing increasing degrees of confidence that an applicant's claimed identity is their real identity. At level 1, the identity of the applicant need not be proved. The applicant is merely required to provide an identifier that can be used to confirm an individual as the applicant. At level 2, an applicant must claim an identity and provide evidence that supports the real world existence and activity of the identity. Level 3 requires that the provided evidence physically identifies the person to whom the identity belongs; and Level 4 requires the provision of further supporting evidence and the implementation of additional processes, including the use of biometrics to further protect an identity from impersonation or fabrication.

However, in practice, there is often a substantial imbalance between the value of guarded properties and the levels of the security checks applied thereto. For example, ATMs which often cap cash withdrawals at £300 per day, use two identifying principles (i.e. knowing a PIN and possessing a debit/credit card) to guard money. However, online banking uses only one principle, namely knowing a username and password to empower a person to transfer thousands of pounds in a matter of seconds (S.Y. K. Wang and W Huang, Internet Jnl of Criminology 2011). Similarly, notwithstanding the growing availability of high-tech identity verification tools (e.g. speech pattern analysis, fingerprint/retinal scanning etc.), a recent survey of information technology professionals revealed that low tech methods of identity verification are used more often than high-tech methods; and of the high tech methods, virtual credit cards and RFID technologies were the preferred options (J. Compomizzi, S. D'Aurora and D. P. Rota, Issues in Information Systems, 2013, 14(1), 162-168).

Growing public use of mobile communications technologies and the convergence of these technologies with sensors and online social networks has caused an exponential increase in the creation and consumption of personal data. While the Internet was conceived as a decentralized network, the most widely used web applications today tend toward centralization. To use these applications, users must consent to the collection of their personal data by the applications. For example, social networks employ a centralized model in which the creator of the social network sets all the terms for membership thereof and has access to all the personal data of the network's members. Furthermore, user privacy is essentially defined by the privacy policies of the applications creators. Thus, control increasingly rests with centralized service providers who, as a consequence, have amassed unprecedented amounts of data about the behaviours and personalities of users. This prevents users from being able to control their own data, since once they hand the data over to a corporation, it is very difficult to refute or retract the decision. Similarly, given the sheer volume of data involved, it is impracticable for an individual to consent to all of the various ways in which data is collected and used. In addition, securing personal data is increasingly difficult in a distributed network system with multiple parties involved in storage and management, since they must all take appropriate steps to secure data from accidental release, theft, unauthorized access, and misuse.

Recent years has seen the emergence of decentralized architectures as a response to the centralized services. Their underlying premise is that personal data is a personal asset, whose full potential value can only be realised if individuals are able to control what personal data they share with whom, for what purposes, under what terms and conditions; and if they can realise the benefits (including financial benefits) of doing so. These decentralized architectures reflect a paradigm shift from information as a tool in the hands of an organization to information as a tool in the hands of the individual, wherein privacy becomes a personal setting, rather than something dictated through a policy created by an organisation. These services include cloud-based personal data vault management platforms such as Personal Fill It (trade mark), My Personal Vault (trade mark), Mydex (trade mark), and Cloud IT (trade mark) recently launched by Barclays Bank (trade mark)). Open PDS enables computations on user data to be performed in a Personal Data Store (PDS) environment, under the control of the user, so that only the relevant summarized data for providing functionality to an application leaves the boundaries of the user's PDS (Y-A de Montjoye, S.S. Wang and A. Pentland, IEEE Data Engineering Bulletin, 35-4(2012)). Similarly, FreedomBox provides a software platform that connects groups of individuals who trust each other. In parallel with these developments, there has been increased discussion of distributed and federated social network structures following a number of well-publicized privacy mishaps by Facebook (trade mark) and Google (trade mark).

However, detection of fraud is difficult in an architecture without a single point of data aggregation, management and control (A. Narayanan, V. Toubiana, S. Barocas, H. Nissenbaum and D. Boneh: A Critical Look at Decentralized Personal Data Architectures. CoRR abs/1202.4503 (2012)). It should be noted that one of the challenges in identifying identity thieves is that they may operate under multiple identities including actual identities, stolen identities and cyber identities. Personal Data Management Systems and distributed social networks could potentially provide a useful hiding place for identity thieves, by enabling the relatively easy creation of multiple digital identities for an individual.

Summary of the Invention

According to a first aspect of the invention there is provided a method for securely managing financial transactions, the method comprising the steps of:

> creating for a first client an account in a repository to produce a first client account;
> storing personal data of the first client in the first client account;
> allowing the first client to configure the first client account to store therein details of

>> (a) one or more financial entities with whom the first client is willing to transact; and
>> (b) a maximum limit on a value of a transaction the first client is willing to undertake with the or each financial entity;

> receiving a request from a financial entity for access to a second client account of a second client, the said request comprising a value of a transaction to be undertaken between the second client and the financial entity;
> determining whether the second client has a second client account in the repository;
> determining, in the event the second client has a second client account in the repository, whether the financial entity is among those whose details are stored in the second client account;
> comparing, in the event the financial entity is among those whose details are stored in the second client account, the value of the transaction with the details stored in the second client account of the maximum limit on the value of a transaction the second client is willing to undertake with the financial entity; and
> allowing the transaction to be conducted in the event the value of the transaction is less than the maximum limit on the value of a transaction the second client is willing to undertake with the financial entity;
> characterised in that the step of creating an account for the first client comprises the steps of:

>> receiving one or more items of identity evidence from the first client;
>> extracting one or more features from the or each item of received identity evidence;
>> validating the authenticity of the or each item of received identity evidence by comparing the or each extracted feature from the or each item of received identity evidence with related one or more items of feature information acquired from an issuing source for the or each item of identity evidence; and

verifying that the first client is the genuine owner of the identity being claimed by way of the received identity evidence; and

the step of storing personal data of the first client in the first client account comprises the step of storing the extracted features from the or each item of received identity evidence whose authenticity has been validated.

Preferably, the step of validating the authenticity of the or each items of received identity evidence comprises the step of cross-comparing at least some of the extracted features from the or each item of received identity evidence to assess their consistency with each other and the related one or more items of feature information acquired from an issuing source for the or each relevant item of identity evidence.

Preferably, the method comprises the step of issuing a token to the first client on creation of the account of the first client account, and storing details of the token in the repository, so that the token is usable to identify the first client as having an account with the repository.

Preferably, the step of allowing the first client to configure the first client account comprises the step of allowing the first client to reconfigure the token issued thereto.

Desirably, the method comprises the step of providing a rating to the first client account according to the number of received items of identity evidence whose authenticity has been validated.

Desirably, the method comprises the step of providing a rating to the first client account according to the issuing source of the or each item of received identity evidence.

Desirably, the step of creating the first client account, is preceded by a step of allowing an operator to establish a first threshold value; and the step of validating the authenticity of the or each items of received identity evidence comprises the step of issuing an alert message in the event a number of received items of identity evidence are found not to be authentic and the number of received items of identity evidence found not to be authentic exceeds the first threshold value.

Preferably, the method comprises the step of requesting the first client to present further items of identity evidence in the event the number of items of received identity evidence found not to be authentic is less than the first threshold value.

Preferably,

(a) the step of creating the first client account, is preceded by a step of allowing the operator to establish a repeat limit; and

(b) the step of requesting the first client to present further items of identity evidence is continued until a required number of items of identity evidence found to be authentic is achieved or until the number of times further items of identity evidence are requested exceeds the repeat limit.

Preferably, the step of requesting the first client to present further items of identity evidence comprises the step of issuing an alert message in the event the number of times further items of identity evidence are requested exceeds the repeat limit.

Desirably, the step of creating a first client account is followed by a step of checking a financial status of the first client and the step of providing a rating to the first client account comprises the step of providing a rating to the first client account according to the net worth of the first client.

Desirably, the step of storing personal data of the first client in the first client account comprises a step of allowing the first client to add further personal data to the first client account.

Desirably, the step of storing personal data of the first client in the first client account comprises a step of contacting third party sources to acquire additional personal data of the first client and adding the additional personal data to the first client account. Preferably, the step of allowing the first client to configure the first client account comprises the step of allowing the first client to configure the first client account to specify details of one or more elements of the personal data stored in the first client account, the first client is willing to share with the or each of the financial entities.

Preferably, the step of comparing the value of the transaction with the details stored in the second client account of the maximum limit on the value of a transaction the second client is willing to undertake with the financial entity comprises the steps of

(a) providing, in the event the financial entity is among those whose details are stored in the second client account, the financial entity with the or each elements of the personal data stored in the second client account, the second client is willing to share with the financial entity;

(b) allowing the financial entity to use the or each provided elements of the personal data to further verify the identity of the second client; and

(c) comparing, in the event identity of the second client has been further verified by the financial entity, the value of the transaction with the details stored in the second client account of the maximum limit on the value of a transaction.

Preferably, the method comprises the step of issuing an alert in the event of any one of the occurrences selected from the group comprising

the second client does not have a second client account with the repository;

the financial entity's details are not stored in the second client account; and

the value of the transaction exceeds the maximum limit on the value of a transaction the second client is willing to undertake with the financial entity.

Desirably, the method comprises the further step of recording the outcome of substantially every received request for access to the second client account.

Desirably, the step of recording the outcome of substantially every received request for access to the second client account comprises the step of issuing an alert message to the second client on receipt of a request for access to the second client account, the alert message comprising details of the outcome of the received request.

According to a second aspect of the invention there is provided a system for securely managing financial transactions, the system comprising

a registration module adapted to create in a repository a first client account for a first client;

a personal data store coupled with the first client account and adapted to store personal data of the first client;

a configuration module adapted to allow the first client to configure the first client account to store details of one or more financial entities with whom the first client is willing to transact; and details of a maximum limit on a value of a transaction the first client is willing to undertake with a given financial entity;

an access request handler adapted to receive a request from a financial entity for access to a second client account of a second client;

a token validation module adapted to determine whether the second client has a second client account in the repository;

an accessor identifier adapted to be activated by the token validation module on confirmation that the second client has a second client account in the repository, to determine whether the financial entity is amongst those whose details are stored in the second client account;

a comparator adapted to be activated by the accessor module on confirmation that the financial entity's details are stored in the second client account, to compare the value of the transaction with the details stored in the second client account of the maximum limit on the value of a transaction the second client is willing to undertake with the financial entity; and

a transaction conductor adapted to be activated by the comparator on confirmation that the value of the transaction is less than the maximum limit, to allow the transaction to be undertaken

characterised in that the registration module comprises

(a) a sampling device adapted to receive one or more items of identity evidence from the first client, to create received identity evidence;

(b) a feature extraction module adapted to extract one or more features from the or each item of received identity evidence, to create one or more extracted features; and

(c) a verification/validation module adapted to:

validate the authenticity of the or each items of received identity evidence, by comparing the or each extracted feature with related one or more items of feature information acquired from an issuing source for the or each relevant item of received identity evidence; and

verify that the first client is the genuine owner of the identity being claimed by way of the received identity evidence; and

the personal data store is adapted to store the extracted features whose authenticity has been validated.

Preferably, the verification/validation module is adapted to validate the authenticity of the or each items of received identity evidence by cross-comparing at least some of the extracted features from the or each item of received identity evidence to assess their consistency with each other and the related one or more items of feature information acquired from an issuing source for the or each relevant item of identity evidence.

Preferably, the system comprises a digital token store comprising one or more client digital tokens issued to the first client and by which the first client may be subsequently recognised by the system as having a an account with the repository.

Preferably, the client digital token may be reconfigured by the first client.

Desirably, the client digital token comprises an element from the set comprising a PIN, a password, a fingerprint scan, a facial scan or an iris scan.

Desirably, the first client account comprises a rating, the value of the rating being determined by the number of items of received identity evidence whose authenticity has been validated.

Desirably, the value of the rating is determined by the issuing source of the or each item of received identity evidence.

Preferably, the system comprises a of a first threshold whose value is configurable by an operator; and the verification/validation module is adapted to issue an alert message in the event one or more received identity evidence are found not to be authentic; and the number of items of received identity evidence found not to be authentic exceeds the first threshold.

Preferably, the verification/validation module is adapted to request the first client to present further items of identity evidence in the event the number of items of received identity evidence found not to be authentic is less than the first threshold value.

Preferably, the system comprises a repeat limit whose value is configurable by an operator and wherein the verification/validation module is adapted to continue to request the first client to present further items of identity evidence until a required number of items of identity evidence found to be authentic is achieved or until the number of times further items of identity evidence are requested exceeds the repeat limit.

Desirably, the registration module is adapted to check the financial status of the first client; and the value of the rating of the first client account is determined by the net worth of the first client.

Desirably, the personal data store is adapted to store further personal data provided by one selected from the group comprising the first client and one or more third party sources on request by the first client.

Desirably, the configuration module is adapted to allow the first client to configure the first client account to specify details of one or more elements of the personal data stored in the first client account, the first client is willing to share with the or each of the financial entities.

Preferably, the comparator is adapted to be activated by the accessor module on confirmation that the financial entity's details are stored in the second client account, to

> (a) provide the financial entity with the or each elements of the personal data stored in the second client account, the second client is willing to share with the financial entity;
> (b) allow the financial entity to use the or each provided element of the personal data to further verify the identity of the second client; and
> (c) compare, in the event the identity of the second client has been further verified by the financial entity, the value of the transaction with the details stored in the second client account of the maximum limit on the value of a transaction.

Preferably, the system is adapted to issue an alert in the event of any one of the occurrences selected from the group comprising
the second client does not have a second client account with the repository;
the financial entity's details are not stored in the second client account; and
the value of the transaction exceeds the maximum limit on the value of a transaction the second client is willing to undertake with the financial entity.

Preferably, the system comprises a transaction history archive adapted to store the outcome of substantially every received request for access to the personal data of the second client.

Preferably, the system is adapted to notify the second client of every received request for access to the personal data of the second client and details of the outcome of the received request.

Desirably, the identity evidence received from the first client may comprise one selected from the group comprising documentary forms of identity evidence, biometric forms of identity evidence and biochemical forms of identity evidence.

Desirably, the sampling device comprises one selected from the group comprising a scanner, a passport reader, a fingerprint reader, a camera/face scanner and an iris scanner.

Desirably, the digital token comprises one selected from the group comprising a PIN, a password, a fingerprint scan, a facial photograph and an iris scan.

According to a third aspect of the invention there is provided a secure financial transaction management computer program, tangibly embodied on a computer readable medium, the computer program product including instructions for causing a computer to execute the method for securely managing financial transactions of the first aspect of the invention.

The present invention is a significant step forward from prior art financial transaction management systems, since it is significantly based on authenticated personal data. This provides a degree of assurance to financial entities using the present invention that the personal data used to establish a customer account (and gain access thereto for the purposes of conducting a financial transaction) is genuine, as is the identity of the customer to whom the personal data relates. The identity assurance aspect is copper-fastened by a rating system which provides a rating to a personal data record according to the number of items of personal data deemed to be authentic, the nature of the issuing source of the identity evidence (e.g. a passport is rated more highly than a sports club membership card) and the financial health of the relevant customer.

The present invention provides an enhanced mechanism for reducing the costs to financial entities of identity fraud or fraudulent transactions conducted using customer accounts. The present invention also provides a unobtrusive mechanism for verifying the identity of customers, which avoids the irritations to customers of more intrusive or cumbersome identity checking measures. In addition, the present invention provides a greater degree of assurance to customers that their financial accounts are likely to be more secure from fraudsters. This will act as an incentive for attracting customers to financial entities using the system of the present invention. In view of the greater degree of assurance the present invention provides to financial entities regarding the security of customer accounts and enhanced detection of fraudsters, financial entities may alter the blanket-wide caps they currently employ on the value of allowable financial transactions, to embrace variable caps tailored to the rating provided by the present invention to individual customer accounts. In so doing, the financial entities may provide a more customer-sensitive and customer-centric financial transaction support service.

From the user's perspective, another advantage is that the present invention employs a digital token mechanism by which the personal data record may be conveniently accessed. This allows the user to provide personal data to financial entities as often as required, while allowing the original physical identity documents (on which the client accounts are based) to be held in safe-keeping at home or in another location.

Description of the Invention

An embodiment of the present invention is herein described, by way of example of only, with reference to the accompanying figures in which:

Figure 1 is a block diagram of a system for managing a repository of authenticated personal data;
Figure 2 is a flow chart of a method of managing a repository of authenticated personal data;
Figure 3 is a flow chart of a registration process in the method of managing a repository of authenticated personal data; and
Figure 4 is a flow chart of an enhanced security method for managing financial transactions in accordance with a first aspect of the invention.

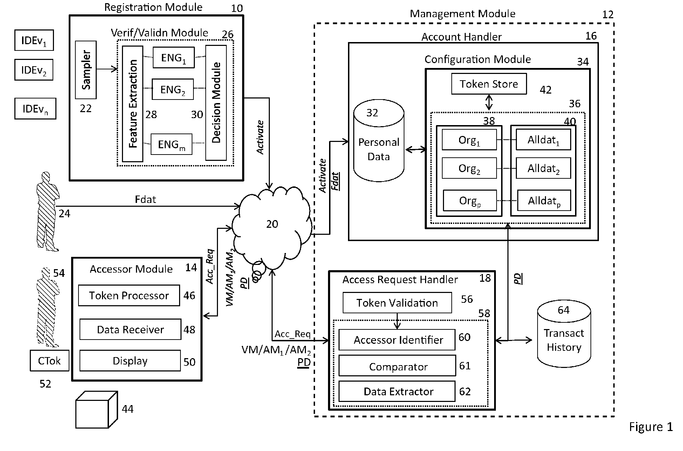

Referring to Figure 1, while certain specific features are illustrated, those skilled in the art will appreciate from the present disclosure that various other features have not been illustrated for the sake of brevity and so as not to obscure more pertinent aspects of the implementations disclosed herein. Similarly, for the sake of clarity, the term "identity" will be used henceforth to mean a collection of attributes that uniquely define a person (the fact of being what a person is). Similarly, the term "identity evidence" will be used henceforth to mean information and/or documentation provided by a user to support their claim to a specified identity. Similarly, the term "issuing source" will be used henceforth to refer to an authority that is responsible for the generation of data and/or documents that may be used as identity evidence, for example, security forces, intelligence agencies, border control/immigration agencies, welfare agencies, utility companies, banks or other financial organisations etc. Furthermore, the term "authoritative source" will be used henceforth to refer to an authority that has access to sufficient information from an issuing source that they are able to confirm the validity of an item of identity evidence.

The system for managing a repository of authenticated personal data may comprise a registration module 10, a management module 12 and an accessor module 14. The management module 12 may comprise an account handler 16 and an access request handler 18. Both the registration module 10 and the accessor module 14 may be coupled with the management module 12 by way of one or more network and other communications interfaces (not shown) and through any combination of wired and wireless local area network (LAN) and/or wide area network (WAN), including a portion of the internet 20. The skilled person will understand that while the access request handler 18 is shown as a separate entity to the account handler 16, this configuration is provided for example purposes only. The system for managing a repository of authenticated personal data should in no way be construed as being limited to the depicted configuration, since the access request handler 16 may be integral with the account handler 18.

The registration module 10 may comprise a sampling device 22. The sampling device 22 may comprise a camera or scanner or other device suitable for capturing a one or more images (or other graphical representations) of a one or more presented documentary items of identity evidence ($IDEv_1$, $IDEv_2$ .... $IDEv_n$) presented by a first client 19. For example, the documentary items of identity evidence might include a passport, a driving license, a military personnel card or a utility bill etc. The skilled person will understand that these are provided for illustration purposes only; and should in no way be construed as limiting the system to these documentary items of identity evidence. Similarly, the skilled person will understand that while Figure 1 shows at least three items of documentary identity evidence, this is provided for illustration purposes only; and should in no way be construed as limiting the system for managing a repository of authenticated personal data. In particular, the system for managing a repository of authenticated personal data is extendable to any number and/or form of documentary identity evidence.

The sampling device 22 may also include a means of acquiring and processing biometric or biochemical forms of identity evidence of a first client 24. For example, the sampling device 22 may be a fingerprint reader configured to acquire a fingerprint from the first client 24. Alternatively, the sampling device 22 may be a DNA reader configured to analyse and determine the DNA sequence from an appropriate sample provided by the first client 24. The skilled person will understand that these examples are provided for illustration purposes only, and should in no way be construed as limiting the scope or function of the system for managing a repository of authenticated personal data. In particular, the system is extendable to assess any biometric or biochemical forms of identity evidence as required. For brevity, the images of the one or more items of documentary forms of identity evidence and/or biometric or biochemical forms of identity evidence will henceforth be collectively known as "acquired attributes".

The sampling device 22 may be adapted to transmit the acquired attributes to a verification/validation module 26. The verification/validation module 26 may comprise a feature extraction module 28 adapted to receive the acquired attributes from the sampling device 22; and extract one or more features ("extracted features"

$\underline{ExFt} \in \mathbb{R}^u$) from the acquired attributes. The extracted features may depend on the acquired attribute from which they are obtained. Subject to this, the number and nature of the extracted features obtained from a given acquired attribute may be user-configurable. For example, the feature extraction module 28 may be adapted to extract features such as date of birth or issuing office from an image of a presented passport document. Alternatively, the feature extraction module 28 may be adapted to extract ridge features from a fingerprint. The skilled person will understand that the above-mentioned extracted features and acquired attributes are provided for example purposes only; and should in no way be construed as limiting the system for managing a repository of authenticated personal data to these extracted features and/or acquired attributes. On the contrary, the system is adaptable to embrace any number and type of extracted features and acquired attributes.

The feature extraction module 28 may be adapted to transmit the extracted features to a one or more comparison engines ($ENG_1$, $ENG_2$.....$ENG_m$), the or each of which may be adapted to authenticate the or each of the extracted features, by:

(a) comparing the or each extracted feature with related feature information (not shown) gathered from an issuing source (not shown); and/or
(b) cross-comparing at least some of the extracted features to assess their consistency with each other and their related feature information (not shown) gathered from an issuing source (not shown).

Alternatively, the comparison engines ($ENG_1$, $ENG_2$.... $ENG_m$) may be adapted to delegate the comparison or cross-comparison operations to an authoritative source (not shown). From these operations, the or each comparison engine ($ENG_1$, $ENG_2$ ....$ENG_m$) may produce an output comprising an indication of the authenticity of the or each relevant extracted feature. The outputs from the comparison engines ($ENG_1$, $ENG_2$ .... $ENG_m$) may be aggregated in a decision module 30 which may be adapted to perform one or both of a:

(a) validation process to determine whether the or each of the presented documentary items of identity evidence ($IDEv_1$, $IDEv_2$ .... $IDEv_n$) is authentic; and
(b) verification process (using for example, the acquired biometric and/or biochemical forms of identity evidence) to determine whether the first client 24 is the owner of the identity they are claiming through the presented items of identity evidence ($IDEv_1$, $IDEv_2$ .... $IDEv_n$).

Based on the outcomes of the validation process and/or the verification process, the decision module 30 may be adapted to produce an output indicating:

(a) the number of presented documentary items of identity evidence ($IDEv_1$, $IDEv_2$ .... $IDEv_n$) deemed to be authentic/ lack authenticity (i.e. may be fraudulent, counterfeit or forged) by comparison with information from the issuing/authoritative source; and
(b) the first client 24 is, or is not, deemed to be the authentic owner of the claimed identity.

The registration module 10 may be adapted to:

(a) store a record of the presented items of identity evidence ($IDEv_1$, $IDEv_2$ .... $IDEv_n$) and provide an

alert message to the authorities, in the event the decision module 30 produces an output indicating that the number of presented documentary items of identity evidence ($IDEv_1$, $IDEv_2$ .... $IDEv_n$) deemed to lack authenticity exceeds a pre-defined first threshold, or that the first client 19 is not the authentic owner of the claimed identity; or
(b) issue an account activation message (*Activate*) to the account handler 16 in the event the decision module 30 produces an output indicating that the number of presented documentary items of identity evidence ($IDEv_1$, $IDEv_2$ .... $IDEv_n$) deemed to be authentic exceeds a pre-defined second threshold; and the first client 19 is the authentic owner of the claimed identity, wherein the account activation message (*Activate*) comprises the or each of the extracted features from the authenticated items of identity evidence; or
(c) issue a request to the first client 24 to provide one or more alternative items of identity evidence, in the event, the decision module 30 produces an output indicating that the number of presented documentary items of identity evidence ($IDEv_1$, $IDEv_2$ .... $IDEv_n$) lacking authenticity is less than the first threshold; the number of presented documentary items of identity evidence ($IDEv_1$, $IDEv_2$ .... $IDEv_n$) deemed to be authentic is less than the second threshold; and the first client 24 is the authentic owner of the claimed identity.

The sampling device 22 and the verification/validation module 26 may be housed in a same computer system of a trusted intermediary body (e.g. bank, post office etc.) and remotely located from the rest of the system of the system for managing a repository of authenticated personal data. Alternatively, the verification/validation module 26 may be housed remotely of the sampling device 22 which remains within the trusted intermediary body. In this alternative formulation, the acquired attributes are encrypted prior to their transmission to the verification/validation module 26.

The account handler 16 may be adapted to create a client account for the first client 24 on receipt of an account activation message (*Activate*) from the registration module 10. The account handler 16 may be adapted to provide a rating to the client account according to the number of presented documentary items of identity evidence ($IDEv_1$, $IDEv_2$ .... $IDEv_n$) deemed to be authentic by the decision module 30. The account handler 16 may also adapted to adjust the rating according to the issuing source of a presented documentary item of identity evidence ($IDEv_1$, $IDEv_2$ .... $IDEv_n$) or the authoritative source for the authentication of a presented item of identity evidence. The rating may provide an indication of confidence in the authenticity of the client (and client account) corresponding with a recognizable level of identity proofing and clearance.

The account handler 16 may be adapted, on creation of a client account, to store in a personal data store 32 associated with the client account, the or each extracted feature from the received account activation message (*Activate*). The personal data store 32 may be contained in a distributed computing environment (e.g. the cloud) or in a monolithic computing environment (e.g. a dedicated server). The personal data store 32 may be adapted to store further personal data $(\underline{Fdat} \in \mathbb{R}^v)$

received by the account handler 16 from the first client 24 or one or more third party sources (not shown) on request by the first client 24. For example, the further personal data *Fdat* may include credit rating information or details of recent travel (e.g. flight bookings etc.) or purchases (e.g. from vendor receipts etc.). The skilled person will understand that these examples of further personal data are provided for illustration purposes only and should in no way be construed as limiting the operation of the system for managing a repository of authenticated personal data to these examples. In particular, the system is adaptable to store any form of further personal data *Fdat*.

The account handler 16 may also be adapted to communicate the further personal data *Fdat* to the comparison engines ($ENG_1$, $ENG_2$, $ENG_m$) for authentication prior to the storage of the further personal data *Fdat* in the personal data store 32. Thus, the personal data store 32 may include unauthenticated data (from the further personal data *Fdat*) and authenticated data (acquired by the registration module 10 and used to establish the client account). In the event the further personal data *Fdat* is not authenticated, the personal data store 32 may be adapted to store the further personal data *Fdat* with a flag indicating its unauthenticated status. The account handler 16 may be adapted to adjust the rating on the client account according to the number of items of further personal data *Fdat* stored therein; or the source of the further personal data *Fdat*; or the number of authenticated stored further personal data items *Fdat*. For brevity, the extracted features used to establish the client account and the further personal data *Fdat* will be collectively known henceforth as "client data" (CD)

wherein $\underline{CD} = \underline{ExFt} \cup \underline{Fdat}$. Thus, $\underline{CD} \in \mathbb{R}^s$, where s= u+v.

The account handler 16 may comprise a configuration module 34, which in turn, may comprise an accepted organisations module 36. The accepted organisations module 36 may comprise an organisations list 38 associated with each client account, wherein the organisations list 38 may comprises one or more identifiers

of organisations ($Org_1$, $Org_2$, $Org_p$) (i.e. $\underline{Org} \in \mathbb{R}^p$)

with whom the first client 24 is willing to share data from their personal data store 32. The accepted organisations module 36 may also comprise an allowed data matrix 40

$(\underline{Alldat} \in \mathbb{R}^{txp})$ associated with each client account, wherein the allowed data matrix 40 may comprise identifiers for the elements of the client data (CD) the first client 24 is willing to share with each of the organisations *Org* identified in the client's organisations list 38. Using the above nomenclature, the first client 24 may choose to allow a given organisation $Org_i$ access to personal data items $\underline{Alldat_i}$ = identifiers $\subseteq \underline{CD}$ (i=1 to p) and

$$\underline{Alldat_i} \in \mathbb{R}^j, j \le s.$$

Both the organisations list 38 and the allowed data matrix 40 may be reconfigurable by the first client 24 to add or remove elements thereto/therefrom. Indeed, the allowed data matrix 40 may be reconfigurable by the first client 24 on presentation of the first client's digital token to a requesting organisation (described below) to support an engagement with the requesting organisation.

The person skilled in the art will understand that while the accepted organisations module 36 is shown in Figure 1 as a separate entity to the personal data store 32, this depiction is provided for ease of understanding of their different functionalities. However, the system for managing a repository of authenticated personal data is not limited to this implementation. Instead, the organisations list 38 and the allowed data matrix 40 may be storable together with the personal data store 32. Alternatively, the organisations list 38 and the allowed data matrix 40 may be storable separately of each other and/or the personal data store 32 in other distributed or monolithic computing environments.

The configuration module 34 may further comprise a digital token store 42 comprising a one or more client digital tokens (not shown) issued to the first client and by which the first client 24 may be subsequently recognised by the system for managing a repository of authenticated personal data. The or each client digital token (not shown) may be configurable by the first client 24; and may, for example, comprise a password or personal identification number (PIN) selected by the first client 24 which may be transmittable to and storable in a mobile computing/communications device (not shown) in the possession of the first client 24. Alternatively, the or each client digital token (not shown) may comprise a biometric feature (e.g. fingerprint, face or iris scan etc.), in which case the first client 24 themselves contain these features (so there is no need to transmit the digital representation of these features to the mobile computing/communications device (not shown) for storage therein). It will be understood that the above examples of client digital tokens are provided for illustration purposes only; and that the system for managing a repository of authenticated personal data should in no way be construed as being limited to these examples. Instead, the system is extendable to any form of client digital token selected by the first client 24.

The client digital token (not shown) may be used to allow the first client 24 to gain access to their client account (not shown) and amend details therein, for example, to add/remove organisations from the organisations list 38 or identifiers for specific elements of client data which the user is willing to share with a given organisation from the organisations list 38. Alternatively, the client digital token (not shown) may be used to subsequently identify a person presenting it, by supporting requests from organisations for access to the stored client data of the first client 24.

The system for managing a repository of authenticated personal data may also include an accessor module 14 which may be accessed by a requesting organisation 44 requesting access to personal data stored in the system for managing a repository of authenticated personal data. The accessor module 14 may comprise a token processor 46, a data receiver module 48 and an operator display 50. The token processor 46 may be adapted to receive a candidate digital token 52 from a second client 54. The candidate digital token 52 is a unique identifier of the second client 54; and may comprise a fingerprint, a facial scan or an iris scan from the second client 54, or a password or PIN etc. It will be understood that the system for managing a repository of authenticated personal data is not limited to these candidate digital tokens, but is extendable to any form of candidate digital token required by the requesting organisation 44. The accessor module 14 may construct an access request (Acc_Req) from the requesting organisation 44 for access to the stored personal data of the second client 54 (as identified by the candidate digital token 52). To this end, the access request (Acc_Req) comprises:

(a) the candidate digital token 52 received by the token processor 46;
(b) an identifier (not shown) of the requesting organisation 44; and
(c) details of which elements of the stored client data the requesting organisation 44 wishes to gain access

The accessor module 14 may be adapted to communicate the access request (Acc_Req) to the access request handler module 18 in the management module 12.

The access request handler module 18 may comprise a token validation module 56 and an access processor 58. The token validation module 56 may be adapted to extract a candidate digital token 52 from a received access request (Acc_Req). The token validation module 56 may also be adapted to communicate with the digital token store 42 to compare the candidate digital token 52 with the client digital tokens contained in the digital token store 42. The token validation module 56 may be adapted to communicate a validation message (VM) to the accessr processor 58 in the event the candidate digital token 52 matches a client digital token in the digital token store 42. The validation message (VM) comprises a confirmation that the second client 54 is a client registered with the system for managing a repository of authenticated personal data. The token validation module 56 may also be adapted to communicate an alert message (AM₁) to the accessor module 14 in the event the received candidate digital token 52 does not match a client digital token. The alert message (AM₁) may comprise a notification that the second client 54 is not a client registered with the system for managing a repository of authenticated personal data.

The access processor 58 may comprise an accessor identifier 60, a comparator 61 and a data extractor 62. The access processor 58 may be adapted to receive the validation message (VM) from the token validation module 56 and activate the accessor identifier 60. The accessor identifier 60 may be adapted, on activation, to extract from the received access request (Acc_Req) the identifier of the requesting organisation 44. The accessor identifier 60 may be adapted to communicate with the organisations list 38 of the client account (not shown) whose client digital token matches the candidate digital token 52; and compare the identifier of the requesting organisation 44 with those in the organisations list 38. The accessor identifier 60 may be adapted to activate the comparator 61 in the event the identifier of the requesting organisation 44 matches an identifier in the organisations list 38 (i.e. the requesting organisation is an organisation with whom the second client 54 is willing to share their data). The accessor identifier 60 may also be adapted to transmit a secondary alert message (AM₂) to the accessor module 14 in the event the identifier of the requesting organisation 44 does not match an identifier in the organisations list 38. The secondary alert message (AM₂) may comprise a notification that the second client 54 is unwilling to share their data with the requesting organisation 44 or is only willing to share their data with the requesting organisation on payment to the second client of a specified fee.

The comparator 61 may be adapted, on activation to extract from the received access request (Acc_Req) details of the elements of the stored client data the requesting organisation 44 wishes to gain access. The comparator 61 may also be adapted to communicate with the allowed data matrix 40 of the client account (not shown) whose client digital token matches the candidate digital token 5 and determine whether the data to which the requesting organisation 44 has requested access matches the identifiers of the elements of the second client's data (in the associated personal data store 32) the second client 54 is willing to share with the requesting organisation 44. The comparator 61 may be adapted to activate the data extractor 62 on confirmation of a match. The comparator 61 may also be adapted to transmit an alert message to the accessor module 14 in the event the data to which the requesting organisation 44 has requested access does not match the identifiers of the elements of the second client's data (in the associated personal data store 32) the second client 54 is willing to share with the requesting organisation 44. The alert message may comprise a notification that the second client is unwilling to share the requested personal data with the requesting organisation, or is only willing to share the requested personal data with the requesting organisation on payment to the second client of a specified fee.

The data extractor 62 may be adapted, on activation, to communicate with the allowed data matrix 40 of the client account (not shown) whose client digital token matches the candidate digital token 5, to retrieve therefrom the identifiers of the elements of the second client's data (in the associated personal data store 32) requested by the requesting organisation 44. The data extractor 62 may be adapted to communicate the identifiers to the personal data store 32 and retrieve therefrom the relevant client data elements (CD). The data extractor 62 may be adapted to communicate the retrieved client data elements (CD) to the data receiver module 48 in the accessor module 14. The data receiver module 48 may be adapted to process the retrieved client data elements (CD) and display a result thereof on the operator display 50. The access request handler 18 may also be adapted to store in a transaction history archive 64, a record of one or more of the received access requests (Acc_Req), including the date and time of receipt and the outcomes thereof (including alert messages ($AM_1$, $AM_2$), personal data transmission etc.). The access request handler 18 may also be adapted to adjust the rating on the client account (not shown) according to the number and/or frequency of successful received access requests (Acc_Req).

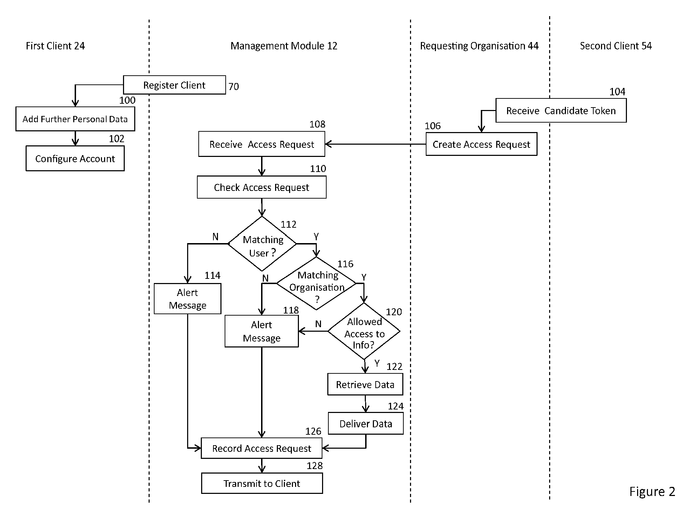

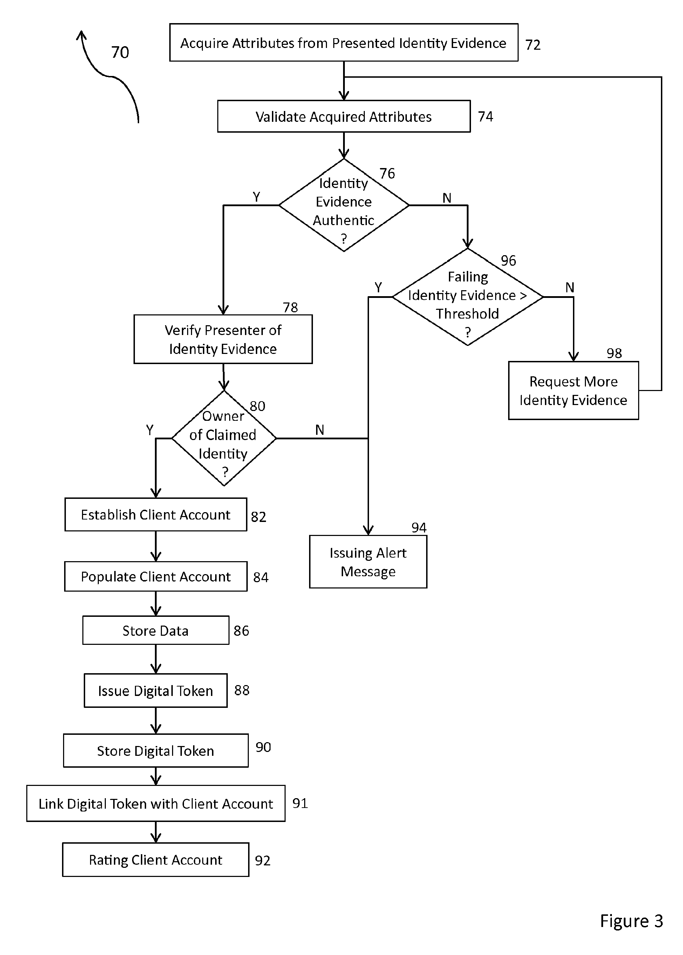

Referring to Figure 2 together with Figure 1, the method of managing a repository of authenticated personal data may comprise a registration process 70 adapted for registering a first client 24 with the system for managing a repository of authenticated personal data. The registration process 70 may be implemented by a trusted third party intermediary (for example, the police, a bank, post office etc.) who may provide a recognized level of confidence in the authenticity of a created client account. Referring to Figure 3, the first step of the registration process 70 may comprise the step of acquiring 72 attributes (e.g. date of birth, expiry date, issuing office etc. attributes from a presented passport document) from one or more pieces of identity evidence presented by the first client 24. The step of acquiring attributes 72 may comprise the step of

(a) capturing with a camera or scanner (or other suitable device) one or more images (or other graphical representations) of one or more pieces of documentary identity evidence ($IDEv_1$, $IDEv_2$,.. $IDEv_n$); or
(b) acquiring with a biometric reader or biochemical analysing device one or more biometric or biochemical forms of identity evidence of the first client 24.

The registration process 70 may comprise a next step of validating 74 the acquired attributes by extracting one or more identifying features therefrom and

(a) comparing the or each extracted feature with related feature information (not shown) gathered from an issuing source (not shown); and/or
(b) cross-comparing at least some of the extracted features, to assess their consistency with each other and their related feature information (not shown) gathered from an issuing source (not shown).

In the event the registration process 70 determines that the presented identity evidence is authentic 76, the registration process 70 may implement a step comprising verifying 78 that the first client 24 is the genuine owner of the claimed identity. In the event the registration process 70 determines 80 that the first client 24 is the genuine owner of the claimed identity, the registration process 70 may comprise the steps of establishing 82 a client account for the first client 24; populating 84 the client account with the or each extracted features; and storing 86 the or each extracted features in the personal data store 32 associated with the client account. The registration process 70 may also comprise the steps of

(a) issuing 88 the first client 24 with a client digital token by which the first client 24 may be subsequently recognised by the system for managing a repository of authenticated personal data;
(b) storing 90 in the digital token store 42, the details of the issued client digital token; and
(c) linking 91 the stored client digital token with the client account, so that the digital token can act as an identifier therefor and enable the subsequent retrieval therefrom of client data.

The registration process 70 may comprise a further step of providing a rating 92 to the client account according to the number of presented items of identity evidence deemed to be authentic or the issuing source of a presented item of identity evidence or the authoritative source for the authentication of a presented item of identity evidence. However, in the event the registration process 70 determines 80 that the first client 24 is not the genuine owner of the claimed identity, the registration process 70 may comprise the step of issuing 94 an alert message to the authorities.

In the event the registration process 70 determines that at least some of the pieces of presented identity evidence lack authenticity, the registration process 70 may comprise a step of determining 96 whether the number of items of identity evidence lacking authenticity exceeds a predefined threshold. In the event the threshold is exceeded, the registration process 70 may comprise the step of issuing 94 an alert message to the authorities. However, in the event the threshold is not exceeded, the registration process 70 may comprise a step of requesting 98 the first client 24 to provide more pieces of identity evidence for validation until a required target number of authentic pieces of identity evidence is achieved. Alternatively, failure by the first client 24 to provide the required number of authentic pieces of identity evidence within a defined number of iterations may cause the registration process 70 to implement a step of issuing 94 an alert message to the authorities.

Returning to Figure 2 together with Figure 1, on completion of the registration process 70, the method of managing a repository of authenticated personal data may comprise the step of allowing the first client 24 to add 100 further data to their client account/personal data store 32. The method may also comprise the step (not shown) of contacting third party sources (e.g. credit rating agencies) to acquire further personal data for inclusion in the client account/personal data store 32. Similarly, the method may also comprise the step of allowing the first client 24 to configure 102 their client account by:

(a) specifying organisations with whom the first client 24 is willing to share at least some of the data contained in their client account;
(b) specifying which elements of the data contained in their client account/personal data store 32, the first client 24 is willing to share with each organisation they specified as being organisations with whom they are willing to share their data; and
(c) reconfiguring their client digital token (e.g. allowing first client 24 to pick their own password or PIN etc.).

For example, a client may specify that they are willing to share their personal data with a local nightclub (e.g. to indicate they are of sufficient age to gain entry to the club) and their financial advisor. However, the client may not be willing to share the same personal data (e.g. personal finances information) with the nightclub as they do with their financial advisor. The method of managing a repository of authenticated personal data allows the first client 24 to specify the parties with whom they are willing to share their personal data; and the elements of their personal data they are willing to share with each such party. The skilled person will understand that the above-described scenarios are provided for illustration purposes only and should in no way be construed as limiting the use of the method to the described night-club or financial advisor example. Similarly, the method of managing a repository of authenticated personal data is not limited to the provision of financial information. On the contrary, method is adaptable for use across a wide variety of domains and information types.

The method of managing a repository of authenticated personal data may comprise the further step of receiving 104 a candidate digital token 52 from a second client 54. This further step may be implemented by a requesting organisation 44 seeking to gain access to at least some of the personal data of the second client 54. The method of managing a repository of authenticated personal data may further comprise the step of allowing the requesting organisation 44 to create 106 an access request (*Acc_Req*) comprising:

(a) the candidate digital token 52;
(b) an identifier of the requesting organisation 44; and
(c) details of the items of the second client's personal data to which the requesting organisation 44 seeks to gain access.

Using the previous nightclub example, the nightclub is the requesting organisation and the second client is a person seeking to prove their age and thereby gain entry to the nightclub. In this case, the nightclub might possess a fingerprint scanner or iris scanner; and the person might present a finger or iris for scanning by the nightclub. Alternatively, the person might send the nightclub with an SMS or other message (comprising a PIN or password etc,) from a mobile computing/communications device on their person. These may be used as the candidate digital token for the person. Using the received candidate digital token the nightclub creates an access request (*Acc_Req*) for the date of birth/age, photo etc. of the person, so as to determine whether to grant the person entry to the nightclub. For example, using near field technology, the person may tap their mobile phone against a reading device at the nightclub and a relevant password, tag or other message is transmitted to the reading device, to enable the person to be identified by the nightclub without needing to present their original identity documents. The skilled person will understand that the above-described scenario and mentioned types of candidate digital tokens are provided for illustration purposes only and should in no way be construed as limiting the use of the method of managing a repository of authenticated personal data or the types of candidate digital tokens usable therein. In particular, the method of managing a repository of authenticated personal data is adaptable to any form of candidate digital token, both embodied within the person of a candidate user and in devices in the possession of the candidate user.

The method of managing a repository of authenticated personal data may comprise the step of receiving 108 the access request (*Acc_Req*) from the requesting organisation 44; and checking 110 the received access request (*Acc_Req*) to determine the identity of the subject thereof (i.e. the person about who information is requested in the received access request (*Acc_Req*)). In the event the method of managing a repository of authenticated personal data determines 112 that the candidate digital token 52 in the received access request (*Acc_Req*) does not match a client digital token (not shown) in the digital token store 42 of the system for managing a repository of authenticated personal data, the method of managing a repository of authenticated personal data may comprise the step of issuing 114 an alert message stating that the second client 54 is not registered with the system for managing a repository of authenticated personal data. However, in the event the method of managing a repository of authenticated personal data determines 112 that the candidate digital token 52 matches a client digital token (not shown) in the digital token store 42 (i.e. the second client 54 is a person registered with the system for managing a repository of authenticated personal data), the method may comprise the step of using the candidate digital token 52/matching client digital token to access the relevant client account and check 116 whether the requesting organisation in the received access request (*Acc_Req*) is entitled to access any of the stored personal data in the client account of the second client 54.

In the event the method of managing a repository of authenticated personal data determines 116 that the identifier of the requesting organisation 44 in the received access request (*Acc_Req*) does not match an identifier (in the organisations list 38 of the client account (not shown)) of an organisation with whom the second client 54 is willing to share their personal data, the method may comprise the step of issuing 118 an alert message stating that the second client 54 is unwilling to share any of their personal data with the requesting organisation 44. Alternatively, the alert message may state that the second client 54 is willing to share personal data with the requesting organisation on payment of a specified fee by the requesting organisation to the second client. The fee may have been specified by the second client 54 while configuring their client account. However, in the event the method of managing a repository of authenticated personal data determines 116 that the identifier of the requesting organisation 44 matches an identifier of an organisation with whom the second client 54 is willing to share their personal data, the method may comprise the step of checking 120 whether the requesting organisation 44 is entitled to access the specific items of personal data requested in the received access request (*Acc_Req*). This comprises the step of checking whether the details of the personal information in the received access request (*Acc_Req*) match the elements of the second client's 54 personal data (contained in the client account/personal data store 32) which the second client 54 indicated as being willing to share with the requesting organisation 44.

In the event the method of managing a repository of authenticated personal data determines 120 that a match is not present, the method may comprise the step of issuing 118 an alert message indicating that the second client 54 is unwilling to share the requested personal information with the requesting organisation 54. Alternatively, the alert message may state that the second client 54 is willing to share the requested personal data with the requesting organisation on payment of a specified fee by the requesting organisation to the second client. The fee may have been specified by the second client 54 while configuring their client account.

However, in the event the method of managing a repository of authenticated personal data determines 120 that the personal information requested by the requesting organisation 44 matches the elements of the second client's 54 personal data which the second client 54 indicated as being willing to share with the requesting organisation 44, the method of managing a repository of authenticated personal data may comprise the step of retrieving 122 from the personal data store 32, the requested items of personal data and delivering 124 them to the requesting organisation 44. The method of managing a repository of authenticated personal data may also comprise the step of displaying (not shown) the retrieved items of personal data. Similarly, the method may also comprise the step of recording 120 received access requests (*Acc_Req*) and the outcomes thereof (i.e. alert messages or details (date/time etc.) of data retrieval.

The method of managing a repository of authenticated personal data may also comprise the step of transmitting 128 (by email or SMS (or other suitable messaging protocol)) details of received access requests to the person identified in the access request (as owner of the requested data). Thus, registrants with the system for managing a repository of authenticated personal data are updated every time their client digital token is used; and informed of authorised and unauthorised requests for their personal data. With this information, registrants can keep track of requests for their personal information; and in response, amend their client accounts to include new organisations with whom they might wish to share their personal information; or further configure their client account to address broader changing trends in requested information. Similarly, registrants may be equipped to detect potential identity theft instances. In addition, registrants may be allowed to configure alert messages to be sent to them by the system/method of managing a repository of authenticated personal data, in the event of particular organisations making requests for the registrants' personal information, or changes in the number/frequency of access requests or changes in the number/frequency of requests for particular elements of the registrant's personal data or requests from particular organisations etc.

In a further formulation, the method/system for managing a store of authenticated personal data may provide a method or system for managing an adaptive secure social network, whose members provide authenticated personal data and choose which elements of that personal data to share with other members of the social network. Membership of the network may be restricted to those persons possessing pre-defined authenticated personal information attributes (e.g. age or gender etc.). This for example, could be used to establish and manage social networks amongst children or other vulnerable members of society (by ensuring undesirable persons might not gain access to the members of the social network). Alternatively, membership of the social network could be according to personal taste attributes (e.g. nightclubs visited, sports club membership, restaurants frequented etc.)

In a preferred embodiment, the method and system for managing a repository of authenticated personal data may form the basis of an enhanced security system and method for managing financial transactions (henceforth know for brevity as the "enhanced security system" and the "enhanced security method" respectively). The architecture of the enhanced security system may be substantially similar to the architecture of the system for managing a repository of personal data as shown in Figure 1.

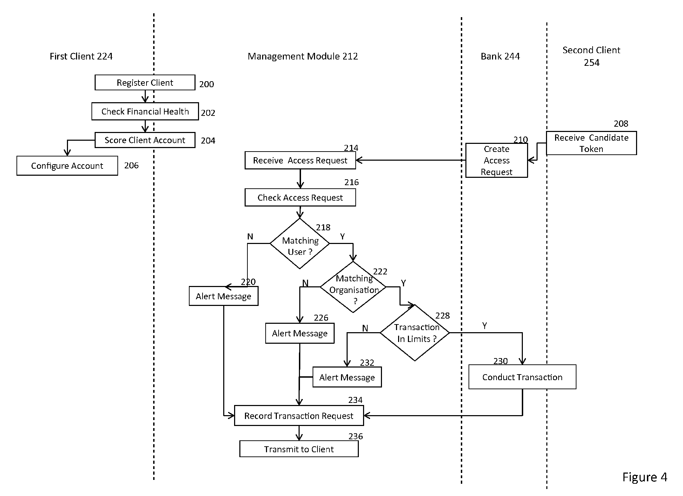

Referring to Figure 4, in the enhanced security method, a first client 224 is registered 200 with the enhanced security system (not shown) for managing financial transactions. The first client 224 is registered 200 using the registration process shown in Figure 3, wherein the registration process may be implemented by a trusted third party intermediary (e.g. a bank). On registering the first client 224, the method may comprise a next step of contacting one or more credit rating agencies or other financial reporting organisations (e.g. Equifax (trade mark), Experian (trade mark) and Trans Union (trade mark)) to perform 202 a credit or other check on the financial health of the first client 224. In a next step, the client account rating is scored 204 according to the financial health of the first client 224 (in addition to, or in place of the rating accorded to the client account during the registration process). In an optional additional step, a photograph of the first client 224 may be taken and appended to the first client's client account.

The first client 224 may be allowed to configure 206 their client account to specify:

(a) banking or other financial organisations with whom the first client 224 is willing to transact;
(b) a maximum or minimum cap on the value of the transactions the first client 224 is willing to undertake with a given banking or other financial organisation; and optionally
(c) the elements of authenticated personal data the first client 224 is willing to share with the or each banking/financial organisation, to enable the or each banking/financial organisation to verify the identity of persons subsequently undertaking financial transactions therewith.

In configuring their client account, the first client 224 may also be allowed to reconfigure their client digital token (e.g. to pick a PIN or password of their choice). The reconfigured elements of the client account are stored in the organisations module, the digital token store and the personal data store of the enhanced security system, substantially as shown in Figure 1.

On receipt 208 of a candidate digital token by a banking/financial organisation 244 from a second client 254, the banking/financial organisation 244 may be allowed to create 210 an access request comprising:

(a) the candidate digital token;
(b) an identifier of the banking/financial organisation 244; and
(c) details of the transaction (including the value thereof) which the second client 254 wishes to undertake with the banking/financial organisation 244.

The enhanced security method may comprise the step of receiving 214 (by the management module 212) the access request from the banking/financial organisation 244; and may further comprise the step of checking 216 the received access request to determine the identity of the subject thereof (i.e. the person who wishes to conduct a transaction with the banking/financial organisation 244).

In the event the enhanced security method determines 218 that candidate digital token in the received access request does not match a client digital token in the digital token store, the enhanced security method may comprise the step of issuing 220 an alert message to the banking/financial organisation 244. The alert message may state that the second client 254 is not registered with the enhanced security system; and consequently, the banking/financial organisation 244 will be unable to verify the identity of the second client 254 using the enhanced security system. However, in the event the enhanced security method determines 218 that the candidate digital token matches a client digital token in the digital token store (i.e. the second client 254 is a person registered with the enhanced security system), the enhanced security method may comprise the step of checking 222 the identity of the banking/financial organisation 244 requesting information about the second client 254 in the received access request.

In the event the enhanced security method determines 222 that the identifier of the banking/financial organisation 244 in the received access request does not match an identifier (in the organisations list) of a banking or other financial organisation with whom the second client 254 is willing to transact, the enhanced security method may comprise the step of issuing 226 an alert message to the banking/financial organisation 244, stating that the second client 254 was unwilling to transact with banking/financial organisation 244. However, in the event the enhanced security method determines 222 that the identifier of the banking/financial organisation 244 matches that of a banking or other financial organisation with whom the second client 254 is willing to transact, the enhanced security method may comprise the step of comparing 228 the value of the value of the transaction (specified in the received access request) which the second client 254 wishes to undertake with the banking/financial organisation 244 against the maximum or minimum cap on the value of the transactions the second client 254 specified (in the organisations module) they were willing to undertake with the banking/financial organisation 244.

The enhanced security method may optionally include an intervening step between determining that the identifier of the banking/financial organisation 244 matches that of an organisation with whom the second client 254 is willing to transact, and comparing the value of the transaction which the second client 254 wishes to undertake with the banking/financial organisation 244 against the maximum or minimum cap on the value of the transactions previously specified by the second client 254. The optional intervening step may provide an additional level of security to the enhanced security method, by providing (not shown) the banking/financial organisation 244 with the elements of authenticated personal data (from the client account) the second client 224 was willing to share with the banking/financial organisation 244 to enable the banking/financial organisation 244 to verify the identity of persons subsequently undertaking financial transactions therewith. The banking/financial organisation 244 may be allowed to request the person attempting the transaction to answer questions based on the provided elements of authenticated personal data. Further optionally, the banking/financial organisation 244 may be provided with a photograph of the face of the first client 224 which they may compare with the face of the person attempting the transaction. In the event the person attempting the transaction was unable to provide the correct answers to the questions (or the face of the person did not match that in the photo of the second client), the enhanced security method may comprise an additional step of issuing an alert message to the banking/financial organisation 244 and/or the first client advising them of the same.

Returning to Figure 4, in the event the enhanced security method determines 228 that the value of the transaction is within the maximum and minimum limits specified in the client account; and complies with the banking/financial organisation's own rules or limits on the value of transactions therewith, the enhanced security method comprises the step of allowing the banking/financial organisation 244 to conduct 230 the transaction with the second client 254. However, in the event the enhanced security method determines 228 that the value of the transaction is greater than the maximum limit or less than the minimum limit specified in the client account; and/or fails to complies with the banking/financial organisation's own rules or limits on the value of transactions therewith, the enhanced security method comprises the step of issuing 232 an alert message to the banking/financial organisation 244. In this eventuality, the enhanced security method may comprise an additional step of allowing the banking/financial organisation 244 to

    (a) terminate the transaction; or
    (b) amend the transaction so that its value is within the above-mentioned limits, and/or complies with the banking/financial organisation's rules; and allow the second client 254 to re-attempt the transaction with the banking/financial organisation 244.

Similarly, the enhanced security method may also comprise the step of recording 234 received requests for transactions from banking/financial organisations and the outcomes thereof (i.e. alert messages or details (date/time etc.) of transaction; and transmitting 236 the record to the second client 254.

Modifications and alterations may be made to the above without departing from the scope of the invention..

## Claims

1.  A method for securely managing financial transactions, the method comprising the steps of:

    creating 200 for a first client 224 an account in a repository to produce a first client account;
    storing 86 personal data of the first client in the first client account;
    allowing the first client to configure 206 the first client account to store therein details of

        (a) one or more financial entities with whom the first client is willing to transact; and
        (b) a maximum limit on a value of a transaction the first client is willing to undertake with the or each financial entity;

    receiving 214 a request from a financial entity 244 for access to a second client account of a second client 254, the said request comprising a value of a transaction to be undertaken between the second client 254 and the financial entity 244;
    determining 218 whether the second client 254 has a second client account in the repository;
    determining 222, in the event the second client 254 has a second client account in the repository, whether the financial entity 244 is among those whose details are stored in the second client account;
    comparing 228, in the event the financial entity 244 is among those whose details are stored in the second client account, the value of the transaction with the details stored in the second client account of the maximum limit on the value of a transaction the second client 254 is willing to undertake with the financial entity 244; and
    allowing 230 the transaction to be conducted in the event the value of the transaction is less than the maximum limit on the value of a transaction the second client 254 is willing to undertake with the financial entity 244\;
    **characterised in that** the step of creating 70 an account for the first client comprises the steps of:

        receiving 72 one or more items of identity evidence from the first client;

extracting one or more features from the or each item of received identity evidence;

validating 74 the authenticity of the or each item of received identity evidence by comparing the or each extracted feature from the or each item of received identity evidence with related one or more items of feature information acquired from an issuing source for the or each item of identity evidence; and

verifying 78 that the first client is the genuine owner of the identity being claimed by way of the received identity evidence; and

the step of storing 86 personal data of the first client in the first client account comprises the step of storing the extracted features from the or each item of received identity evidence whose authenticity has been validated.

2. The method of Claim 1 wherein the step of validating 74 the authenticity of the or each items of received identity evidence comprises the step of cross-comparing at least some of the extracted features from the or each item of received identity evidence to assess their consistency with each other and the related one or more items of feature information acquired from an issuing source for the or each relevant item of identity evidence.

3. The method of Claim 1 or Claim 2 wherein the method comprises the step of issuing 88 a token to the first client on creation of the account of the first client account, and storing 90 details of the token in the repository, so that the token is usable to identify the first client as having an account with the repository.

4. The method of Claim 3 wherein the step of allowing the first client to configure 102 the first client account comprises the step of allowing the first client to reconfigure the token issued thereto.

5. The method of any of the preceding Claims, wherein the method comprises the step of providing 92 a rating to the first client account according to the number of received items of identity evidence whose authenticity has been validated.

6. The method of any of the preceding Claims, wherein the method comprises the step of providing 92 a rating to the first client account according to the issuing source of the or each item of received identity evidence.

7. The method of any of the preceding Claims, wherein

(a) the step of creating 70 the first client account, is preceded by a step of allowing an operator to establish a first threshold value; and

(b) the step of validating 74 the authenticity of the or each items of received identity evidence comprises the step of issuing 94 an alert message in the event a number of received items of identity evidence are found not to be authentic and the number of received items of identity evidence found not to be authentic exceeds the first threshold value.

8. The method of Claim 7 wherein the method comprises the step of requesting 98 the first client to present further items of identity evidence in the event the number of items of received identity evidence found not to be authentic is less than the first threshold value.

9. The method of Claim 8 wherein

(a) the step of creating 70 the first client account, is preceded by a step of allowing the operator to establish a repeat limit; and

(b) the step of requesting 98 the first client to present further items of identity evidence is continued until a required number of items of identity evidence found to be authentic is achieved or until the number of times further items of identity evidence are requested exceeds the repeat limit.

10. The method of Claim 9 wherein the step of requesting the first client to present further items of identity evidence comprises the step of issuing 94 an alert message in the event the number of times further items of identity evidence are requested exceeds the repeat limit.

11. The method of Claim 5 or Claim 6 wherein the step of creating a first client account is followed by a step of checking a financial status of the first client and the step of providing 92 a rating to the first client account comprises the step of providing 92 a rating to the first client account according to the net worth of the first client.

12. The method of any of the preceding claims wherein the step of storing 86 personal data of the first client in the first client account comprises a step of allowing the first client to add 100 further personal data to the first client account.

13. The method of any of the preceding claims wherein the step of storing 86 personal data of the first client in the first client account comprises a step of contacting third party sources to acquire additional personal data of the first client and adding the additional personal data to the first client account.

**14.** The method of any of the preceding claims, wherein the step of allowing the first client to configure 206 the first client account comprises the step of allowing the first client to configure 206 the first client account to specify details of one or more elements of the personal data stored in the first client account, the first client is willing to share with the or each of the financial entities.

**15.** The method of Claim 14 wherein the step of comparing 228 the value of the transaction with the details stored in the second client account of the maximum limit on the value of a transaction the second client 254 is willing to undertake with the financial entity 244 comprises the steps of

> (a) providing, in the event the financial entity 244 is among those whose details are stored in the second client account, the financial entity 244 with the or each elements of the personal data stored in the second client account, the second client is willing to share with the financial entity;
> (b) allowing the financial entity to use the or each provided elements of the personal data to further verify the identity of the second client; and
> (c) comparing, in the event identity of the second client has been further verified by the financial entity, the value of the transaction with the details stored in the second client account of the maximum limit on the value of a transaction.

**16.** The method of any of the preceding claims wherein the method comprises the step of issuing an alert in the event of any one of the occurrences selected from the group comprising
the second client does not have a second client account with the repository;
the financial entity's details are not stored in the second client account; and
the value of the transaction exceeds the maximum limit on the value of a transaction the second client 254 is willing to undertake with the financial entity 24.

**17.** The method of any of the preceding claims wherein the method comprises the further step of recording the outcome of substantially every received request for access to the second client account.

**18.** The method of Claim 17 where the step of recording the outcome of substantially every received request for access to the second client account comprises the step of issuing an alert message to the second client on receipt of a request for access to the second client account, the alert message comprising details of the outcome of the received request.

**19.** A system for securely managing financial transactions, the system comprising

a registration module 10 adapted to create in a repository a first client account 70 for a first client;
a personal data store 32 coupled with the first client account and adapted to store personal data of the first client;
a configuration module 34 adapted to allow the first client to configure the first client account to store details of one or more financial entities with whom the first client is willing to transact; and details of a maximum limit on a value of a transaction the first client is willing to undertake with a given financial entity;
an access request handler adapted to receive a request from a financial entity for access to a second client account of a second client;
a token validation module adapted to determine whether the second client has a second client account in the repository;
an accessor identifier adapted to be activated by the token validation module on confirmation that the second client has a second client account in the repository, to determine whether the financial entity is amongst those whose details are stored in the second client account;
a comparator adapted to be activated by the accessor module on confirmation that the financial entity's details are stored in the second client account, to compare the value of the transaction with the details stored in the second client account of the maximum limit on the value of a transaction the second client is willing to undertake with the financial entity; and
a transaction conductor adapted to be activated by the comparator on confirmation that the value of the transaction is less than the maximum limit, to allow the transaction to be undertaken

**characterised in that** the registration module 10 comprises

> (a) a sampling device adapted to receive one or more items of identity evidence from the first client, to create received identity evidence;
> (b) a feature extraction module adapted to extract one or more features from the or each item of received identity evidence, to create one or more extracted features; and
> (c) a verification/validation module adapted to:

>> validate the authenticity of the or each items of received identity evidence, by comparing the or each extracted feature with related one or more items of feature information acquired from an issuing source for the or each relevant item of received identity evidence; and
>> verify that the first client is the genuine owner of the identity being claimed by way of the received identity evidence; and

the personal data store is adapted to store the extracted features whose authenticity has been validated.

20. The system of Claim 19 wherein the verification/validation module is adapted to validate the authenticity of the or each items of received identity evidence by cross-comparing at least some of the extracted features from the or each item of received identity evidence to assess their consistency with each other and the related one or more items of feature information acquired from an issuing source for the or each relevant item of identity evidence.

21. The system of Claim 19 or Claim 20 wherein the system comprises a digital token store comprising one or more client digital tokens issued to the first client and by which the first client may be subsequently recognised by the system as having a an account with the repository.

22. The system of Claim 21 wherein the client digital token may be reconfigured by the first client.

23. The system of Claim 21 or Claim 22, wherein the client digital token comprises an element from the set comprising a PIN, a password, a fingerprint scan, a facial scan or an iris scan.

24. The system of any one of Claims 19 to 23, wherein the first client account comprises a rating, the value of the rating being determined by the number of items of received identity evidence whose authenticity has been validated.

25. The system of any one of Claims 19 to 24, wherein the value of the rating is determined by the issuing source of the or each item of received identity evidence.

26. The system of any one of Claims 19 to 25, wherein the system comprises a of a first threshold whose value is configurable by an operator; and the verification/validation module is adapted to issue an alert message in the event one or more received identity evidence are found not to be authentic; and the number of items of received identity evidence found not to be authentic exceeds the first threshold.

27. The system of Claim 26 wherein the verification/validation module is adapted to request the first client to present further items of identity evidence in the event the number of items of received identity evidence found not to be authentic is less than the first threshold value.

28. The system of Claim 27 wherein the system comprises a repeat limit whose value is configurable by an operator and wherein the verification/validation module is adapted to continue to request the first client to present further items of identity evidence until a required number of items of identity evidence found to be authentic is achieved or until the number of times further items of identity evidence are requested exceeds the repeat limit.

29. The system of Claim 24 or Claim 25 wherein the registration module 10 is adapted to check the financial status of the first client; and the value of the rating of the first client account is determined by the net worth of the first client.

30. The system of any one of Claims 19 to 29, wherein the personal data store is adapted to store further personal data provided by one selected from the group comprising the first client and one or more third party sources on request by the first client.

31. The system of any one of Claims 19 to 30, wherein the configuration module 34 is adapted to allow the first client to configure the first client account to specify details of one or more elements of the personal data stored in the first client account, the first client is willing to share with the or each of the financial entities.

32. The system of Claim 31, wherein the comparator is adapted to be activated by the accessor module on confirmation that the financial entity's details are stored in the second client account, to

(a) provide the financial entity 244 with the or each elements of the personal data stored in the second client account, the second client is willing to share with the financial entity;
(b) allow the financial entity 244 to use the or each provided element of the personal data to further verify the identity of the second client; and
(c) compare, in the event the identity of the second client has been further verified by the financial entity, the value of the transaction with the details stored in the second client account of the maximum limit on the value of a transaction.

33. The system of any one of Claims 19 to 32, wherein the system is adapted to issue an alert in the event of any one of the occurrences selected from the group comprising
the second client does not have a second client account with the repository;
the financial entity's details are not stored in the second client account; and
the value of the transaction exceeds the maximum limit on the value of a transaction the second client 254 is willing to undertake with the financial entity 24.

**34.** The system of any one of Claims 19 to 33, wherein the system comprises a transaction history archive adapted to store the outcome of substantially every received request for access to the personal data of the second client.

**35.** The system of Claim 34 wherein the system is adapted to notify the second client of every received request for access to the personal data of the second client and details of the outcome of the received request.

**36.** The system of any one of Claims 19 to 35 wherein the identity evidence received from the first client may comprise one selected from the group comprising documentary forms of identity evidence, biometric forms of identity evidence and biochemical forms of identity evidence.

**37.** The system of Claim 36 wherein the sampling device comprises one selected from the group comprising a scanner, a passport reader, a fingerprint reader, a camera/face scanner and an iris scanner.

**38.** The system of any one of Claims 19 to 37 wherein the digital token comprises one selected from the group comprising a PIN, a password, a fingerprint scan, a facial photograph and an iris scan.

**39.** A secure financial transaction management computer program, tangibly embodied on a computer readable medium, the computer program product including instructions for causing a computer to execute the method for securely managing financial transactions as claimed in Claim .1.

Figure 1

Figure 2

Figure 3

First Client 224

Register Client — 200

Check Financial Health — 202

Score Client Account — 204

Configure Account — 206

Management Module 212

Receive Access Request — 214

Check Access Request — 216

218
Matching User ?

N

Y

Alert Message — 220

222
Matching Organisation ?

N

Y

Alert Message — 226

228
Transaction In Limits ?

N

Y

Alert Message — 232

Record Transaction Request — 234

Transmit to Client — 236

Bank 244

Create Access Request — 210

Second Client 254

Receive Candidate Token — 208

Conduct Transaction — 230

Figure 4

**Europäisches Patentamt**
**European Patent Office**
**Office européen des brevets**

# EUROPEAN SEARCH REPORT

Application Number

EP 15 17 0569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/130252 A1 (BOYLE CURRIE P [CA]) 7 June 2007 (2007-06-07) * the whole document * | 1-39 | INV. G06Q20/40 G06F21/00 H04L9/00 |
| X | EP 2 254 093 A1 (DAON HOLDINGS LTD [KY]) 24 November 2010 (2010-11-24) * the whole document * | 1-39 | |
| X | US 2013/198078 A1 (KIRSCH STEVEN TODD [US]) 1 August 2013 (2013-08-01) * the whole document * | 1-39 | |
| X | US 2006/016877 A1 (BONALLE DAVID S [US] ET AL) 26 January 2006 (2006-01-26) * the whole document * | 1-39 | |

TECHNICAL FIELDS
SEARCHED      (IPC)

G06Q
G06F
H04L

The present search report has been drawn up for all claims

| Place of search | Date of completion of the search | Examiner |
|---|---|---|
| The Hague | 30 October 2015 | Wolles, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                          EP 15 17 0569

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2015

| Patent document cited in search report | Publication date | Patent family member(s) | Publication date |
|---|---|---|---|
| US 2007130252 A1 | 07-06-2007 | CA 2528866 A1<br>US 2007130252 A1 | 06-06-2007<br>07-06-2007 |
| EP 2254093 A1 | 24-11-2010 | NONE | |
| US 2013198078 A1 | 01-08-2013 | NONE | |
| US 2006016877 A1 | 26-01-2006 | US 2006016877 A1<br>US 2008015994 A1<br>US 2008173708 A1<br>US 2009289112 A1<br>US 2010312698 A1<br>US 2011288993 A1<br>US 2014081857 A1 | 26-01-2006<br>17-01-2008<br>24-07-2008<br>26-11-2009<br>09-12-2010<br>24-11-2011<br>20-03-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Fraud Typologies and Victims of Fraud - Literature Review. National Fraud Authority, 2009
- **CIFAS.** *Fraud Trends,* 17 January 2013
- Annual Fraud Indicator. National Fraud Authority, 2013
- *Victims of Identity Theft,* 2012
- **A. HEDAYATI.** *Jnl of law and Conflict Resolution,* 2012, vol. 4 (1
- Identity Theft. **H. COPES H. ; L. VIERAITIS.** Criminology: a Reference Handbook. SAGE Publications Inc, 2009
- Identity Proofing and Verification of an Individual. *Good Practice Guide,* December 2013, vol. 45 (2.2
- **S.Y. K. WANG ; W HUANG.** *Internet Jnl of Criminology,* 2011
- **J. COMPOMIZZI ; S. D'AURORA ; D. P. ROTA.** *Issues in Information Systems,* 2013, vol. 14 (1), 162-168
- **Y-A DE MONTJOYE ; S.S. WANG ; A. PENTLAND.** *IEEE Data Engineering Bulletin,* 2012, vol. 35-4
- **A. NARAYANAN ; V. TOUBIANA ; S. BAROCAS ; H. NISSENBAUM ; D. BONEH.** A Critical Look at Decentralized Personal Data Architectures. *CoRR abs/1202.4503,* 2012